(19) Europäisches Patentamt
European Patent Office
Office européen des brevets

(11) **EP 3 518 087 A1**

(12) **EUROPEAN PATENT APPLICATION**

(43) Date of publication:
**31.07.2019 Bulletin 2019/31**

(51) Int Cl.:
**G06F 3/0481** (2013.01)   **H04N 5/232** (2006.01)
**G06T 15/20** (2011.01)

(21) Application number: **18305077.2**

(22) Date of filing: **29.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **THOMSON LICENSING**
**92130 Issy les Moulineaux (FR)**

(72) Inventors:
• LE ROUX, Jean
  35576 CESSON-SEVIGNE (FR)
• LEGALLAIS, Yvon
  35576 CESSON-SEVIGNE (FR)
• SALMON-LEGAGNEUR, Charles
  35576 CESSON-SEVIGNE (FR)

(74) Representative: **Huchet, Anne et al**
**InterDigital CE Patent Holdings**
**20, rue Rouget de Lisle**
**92130 Issy-les-Moulineaux (FR)**

(54) **METHOD AND NETWORK EQUIPMENT FOR TILING A SPHERE REPRESENTING A SPHERICAL MULTIMEDIA CONTENT**

(57)   A network equipment configured for tiling with a set of tiles a sphere representing a scene of a spherical immersive content, which comprises at least one memory (305) and at least one processing circuitry (304) configured to spatially split the scene of the spherical multimedia content with at least a first type of tiles and a second type of tiles.

FIG.10

EP 3 518 087 A1

**Description**

TECHNICAL FIELD

The present disclosure relates generally to the streaming of spherical videos (so called 360° videos) to an end device through a delivery network.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Spherical video content renders a scene with a 360° angle horizontally (and 180° vertically) allowing the user to navigate (i.e. pan) within the spherical scene for which the capture point is moving along the camera motion decided by an operator/scenarist. A spherical content is obtained through a multi-head camera, the scene being composed through stitching the camera's views, projecting them onto a sphere, mapping the sphere content onto a plan (for instance through an equirectangular projection) and compressing it through conventional video encoders.

Spherical videos offer an immersive experience wherein a user can look around using an adapted end-device (such as a head-mounted display (HMD)) or can navigate freely within a scene on a flat display by controlling the viewport with a controlling apparatus (such as a mouse, a remote control or a touch screen).

Such a freedom in spatial navigation requires that the whole spherical scene is delivered to a player (embedded within the HMD or TV set) configured to extract the video portion to be visualized depending on the position of the viewport within the scene. Therefore, a high bandwidth is necessary to deliver the whole spherical video (to offer an unrestricted spherical video service in 4K resolution, a video stream equivalent to twelve 4K videos has to be provided).

The majority of known solutions streaming spherical videos provides the full spherical scene to the end device, but only less than 10% of the whole scene is presented to the user. Since delivery networks have limited bandwidth, the video quality is decreased to meet bandwidth constraints.

Other known solutions mitigate the degradation of the video quality by reducing the resolution of the portion of the 360° scene arranged outside of the current viewport of the end device (i.e. the complete spherical scene is sent from a server with a non-uniform coding). In particular, 30 different viewports can be required to cover the whole spherical scene, so that 30 different versions of the same immersive video are generated and stored at the server side. Nevertheless, when the viewport of the end device is moved upon user's action outside of the highest resolution areas, the displayed video suffers from a sudden degradation.

The present disclosure has been devised with the foregoing in mind.

SUMMARY

The disclosure concerns a method for tiling with a set of tiles a sphere representing a scene of a spherical immersive content,
said method comprising:

-    spatially splitting the scene of the spherical multimedia content with at least a first type of tiles and a second type of tiles.

In an embodiment, the tiles of the set of tiles can be distributed amongst three different areas of the sphere.

In an embodiment, the three areas comprise an equator area surrounding the equator of the sphere and two pole areas arranged at the poles of the sphere.

In an embodiment, the method can comprise:

-    obtaining an altitude for each parallel line of the sphere comprising one or several centroids of the tiles of the first type, each tile of the first type being defined as a portion of said sphere covering a tile horizontal angular amplitude and a tile vertical angular amplitude;
-    obtaining an angular position for each centroid of the tiles of first type arranged on the parallel lines;
-    applying first rotation matrices to a reference tile of first type to obtain the tiles of the first type, each of said first rotation matrices depending on the obtained altitude and angular position of the centroid of a corresponding tile of first type to be obtained.

In an embodiment, each of said first rotation matrices can be a first matrix product of two rotation matrices defined by the following equation:

$$Rot_{ij} = Rot(y, \varphi_{ij}) * Rot(x, \theta_j)$$

wherein:

- $Rot_{ij}$ is the first matrix product,
- $Rot(x, \theta_j)$ is a rotation matrix associated with a rotation of an angle around an axis x of an orthogonal system of axes x,y,z arranged at a center of the sphere,
- $Rot(y, \varphi_{ij})$ is a rotation matrix associated with a rotation of an angle around the axis y of the orthogonal system.

In an embodiment, the equator area can comprise a number of parallel lines depending on the vertical angular amplitude of the tiles of the first type.

In an embodiment, the number L of parallel lines of the equator area can be given by:

$$L = round (90° / \theta_{tile}) + 1$$

wherein $\theta_{tile}$ is the tile vertical angular amplitude of tiles of first type.

In an embodiment, the method can comprise:

- obtaining an altitude for each parallel line of the sphere comprising one or several centroids of the tiles of the second type, each tile of the second type being defined as a portion of said sphere covering a tile horizontal angular amplitude and a tile vertical angular amplitude;
- obtaining an angular position for each centroid of the tiles of second type arranged on the parallel lines;
- applying second rotation matrices to a reference tile of second type to obtain the tiles of the second type, each of said second rotation matrices depending on the obtained altitude and angular position of the centroid of a corresponding tile of second type to be obtained.

In an embodiment, each of said second rotation matrices can be a second matrix product of three rotation matrices defined by the following equation:

$$Rot'_{ij} = Rot(x, \psi_i) \times Rot(y, \varphi_{ij}) \times Rot(x, \theta_j)$$

wherein:

- $Rot'_{ij}$ is the second matrix product,
- $Rot(x, \theta_j)$ is a rotation matrix associated with a rotation of an angle around an axis x of an orthogonal system of axes x,y,z arranged at a center of the sphere,
- $Rot(y, \varphi_{ij})$ is a rotation matrix associated with a rotation of an angle around the axis y of the orthogonal system,
- $Rot(x, \psi_i)$ is a rotation matrix associated with a rotation of an angle around the axis x of the orthogonal system equals to + 90° or - 90°.

In an embodiment, a pole area of the pole areas can comprise a number of parallel lines depending on the vertical angular amplitude of the tiles of the second type.

In an embodiment, the number L of parallel lines can be given by:

$$L = round (P° / \Omega_{tile}) + 1$$

wherein P° is a horizontal angular amplitude delimiting a pole area and $\Omega_{tile}$ is the vertical amplitude of tiles of second type.

In an embodiment, the tiles of the first type can have a rectangular shape and the tiles of the second type can have a square shape.

The present disclosure also concerns a network equipment configured for tiling with a set of tiles a sphere representing a scene of a spherical immersive content, said network equipment comprising at least one memory and at least one processing circuitry configured to spatially split the scene of the spherical multimedia content with at least a first type of tiles and a second type of tiles.

In an embodiment, the tiles of the set of tiles can be distributed amongst three areas on the scene.

In an embodiment, the three areas can comprise an equator area surrounding the equator of the sphere and two pole areas arranged at the poles of the sphere.

The present disclosure is further directed to a method to be implemented at a terminal configured to be in communication with a network equipment to receive a spherical immersive content with a scene represented by a sphere, wherein the method comprises receiving information on a tiling of the scene with a set of tiles from the network equipment, the tiling spatially splitting the scene of the spherical multimedia content with at least a first type of tiles and a second type of tiles.

In addition, the present disclosure also concerns a terminal configured to be in communication with a network equipment to receive a spherical immersive content with a scene represented by a sphere, wherein said terminal comprises at least one memory and at least one processing circuitry configured for receiving information on a tiling of the scene with a set of tiles from the network equipment, the tiling spatially splitting the scene of the spherical multimedia content with at least a first type of tiles and a second type of tiles.

Besides, the present disclosure is further directed to a non-transitory program storage device, readable by a computer, tangibly embodying a program of instructions executable by the computer to perform a method for tiling with a set of tiles a sphere representing a scene of a spherical immersive content, said method comprising:

- spatially splitting the scene of the spherical multimedia content with at least a first type of tiles and a second type of tiles.

The present disclosure also concerns a computer program product which is stored on a non-transitory computer readable medium and comprises program code instructions executable by a processor for implementing a method for tiling with a set of tiles a sphere representing a scene of a spherical immersive content, said method comprising:

- spatially splitting the scene of the spherical multimedia content with at least a first type of tiles and a second type of tiles.

The method according to the disclosure may be implemented in software on a programmable apparatus. It may be implemented solely in hardware or in software, or in a combination thereof.

Some processes implemented by elements of the present disclosure may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as "circuit", "module" or "system". Furthermore, such elements may take the form of a computer program product embodied in any tangible medium of expression having computer usable program code embodied in the medium.

Since elements of the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like.

The disclosure thus provides a computer-readable program comprising computer-executable instructions to enable a computer to perform the method for tiling with a set of tiles a sphere representing a spherical multimedia content according to the disclosure.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

## BRIEF DESCRIPTION OF THE DRAWINGS

The disclosure will be better understood and illustrated by means of the following embodiment and execution examples, in no way limitative, with reference to the appended figures on which:

- Figure 1 is a schematic diagram of an exemplary network architecture wherein the present principles might be implemented;
- Figure 2 is a schematic block diagram of an exemplary client terminal wherein the present principles might be implemented;

- Figure 3 is a schematic block diagram of an exemplary network equipment wherein the present principles might be implemented;
- Figure 4 is flow chart of an exemplary method used by some embodiments of the present principles for tiling a spherical immersive content;
- Figure 5 illustrates a spatial orthogonal system used to implement the method of Figure 4;
- Figure 6 depicts a reference rectangular tile according to the present principles;
- Figure 7 shows an exemplary rectangular tile obtained by the method shown in Figure 4;
- Figure 8 depicts a reference square tile according to the present principles;
- Figure 9 shows an exemplary square tile obtained by the method shown in Figure 4;
- Figure 10 shows an example of parallel lines arranged on the scene defined with the spatial orthogonal system of the sphere of Figure 5, according to the present principles;
- Figures 11 and 12 show two different views of an exemplary equator zone comprising rectangular tiles according to the present principles;
- Figure 13 illustrates an exemplary rotation of the spatial orthogonal system shown in Figure 5, according to the present principles;
- Figure 14 shows two exemplary pole areas comprising square tiles according to the present principles;
- Figure 15 depicts square tiles defining a pole area before applying a rotation to the corresponding pole, according to the present principles;
- Figure 16 shows an exemplary projection on a plane of a tile obtained by the method of Figure 4;
- Figures 17 and 18 show two exemplary overprovisioning tiles patterns compliant with the present principles.

Wherever possible, the same reference numerals will be used throughout the figures to refer to the same or like parts.

DETAILED DESCRIPTION

The following description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

In the claims hereof, any element expressed as a means and/or module for performing a specified function is intended to encompass any way of performing that function including, for example, a) a combination of circuit elements that performs that function or b) software in any form, including, therefore, firmware, microcode or the like, combined with appropriate circuitry for executing that software to perform the function. It is thus regarded that any means that can provide those functionalities are equivalent to those shown herein.

In addition, it is to be understood that the figures and descriptions of the present disclosure have been simplified to illustrate elements that are relevant for a clear understanding of the present disclosure, while eliminating, for purposes of clarity, many other elements found in typical digital multimedia content delivery methods, devices and systems. However, because such elements are well known in the art, a detailed discussion of such elements is not provided herein. The disclosure herein is directed to all such variations and modifications known to those skilled in the art.

The present disclosure is depicted with regard to a streaming environment to deliver a spherical multimedia content (such as a spherical video) to a client terminal through a delivery network.

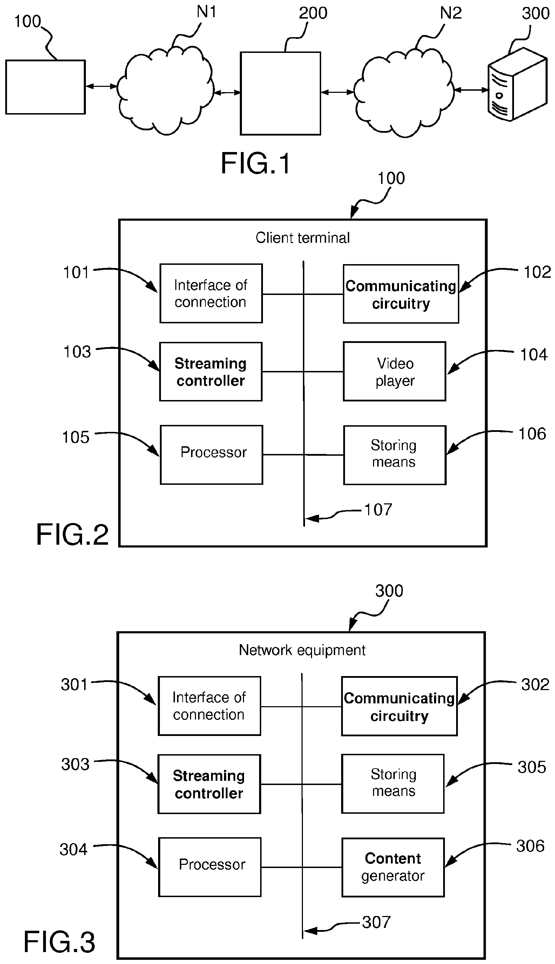

As shown in the illustrative but non-limiting example of Figure 1, the network architecture, wherein the present disclosure might be implemented, comprises a client terminal 100, a gateway 200 and a network equipment 300. Naturally, other network architecture might be operated without departing from the scope of the present principles.

The client terminal 100 - connected to the gateway 200 through a first network N1 (such as a home network or an enterprise network) - may wish to request a spherical video stored on a remote network equipment 300 through a second network N2 (such as the Internet network). The first network N1 is connected to the second network N2 thanks to the gateway 200.

The network equipment 300 is configured to stream segments to the client terminal 100, according to the client request, using a streaming protocol (such as the HTTP adaptive streaming protocol, so called HAS).

As shown in the example of Figure 2, the client terminal 100 can comprise at least:

- an interface of connection 101 (wired and/or wireless, as for example Wi-Fi, Ethernet, etc.) to the first network N1;
- a communication circuitry 102 containing the protocol stacks to communicate with the network equipment 300. In particular, the communication module 102 comprises the TCP/IP stack well known in the art. Of course, it could be any other type of network and/or communicating means enabling the client terminal 100 to communicate with the network equipment 300;
- a streaming controller 103 which receives the spherical video from the network equipment 300;
- a video player 104 adapted to decode and render the spherical video;
- one or more processor(s) 105 for executing the applications and programs stored in a non-volatile memory of the client terminal 100;
- storing means 106, such as a volatile memory, for buffering for instance the segments received from the network equipment 300 before their transmission to the video player 104 or additional parameters information as described hereinafter;
- an internal bus 107 to connect the various modules and all means well known to the skilled in the art for performing the generic client terminal functionalities.

As an example, the client terminal 100 is a portable media device, a mobile phone, a tablet or a laptop, a head mounted device, a set-top box or the like. Naturally, the client terminal 100 might not comprise a complete video player, but only some sub-elements such as the ones for demultiplexing and decoding the media content and might rely upon an external means to display the decoded content to the end user.

As shown in the example of Figure 3, the network equipment 300 can comprise at least:

- an interface of connection 301 to the second network N2;
- a communication circuitry 302 to deliver data to one or several requesting terminals. In particular, the communication circuitry 302 can comprise the TCP/IP stack well known in the art. Of course, it could be any other type of network and/or communicating means enabling the network equipment 300 to communicate with a client terminal 100;
- a streaming controller 303 configured to deliver the spherical video to one or several client terminals 100;
- one or more processor(s) 304 for executing the applications and programs stored in a non-volatile memory of the network equipment 300;
- storing means 305;
- a content generator 306 configured to generate a spherical video to be transmitted. It should be understood that the content generator may be arranged in a separate apparatus distinct from the network equipment 300. In such case, the apparatus comprising the content generator can send the spherical video to the network equipment;
- an internal bus 307 to connect the various modules and all means well known to the skilled in the art for performing the generic network equipment functionalities.

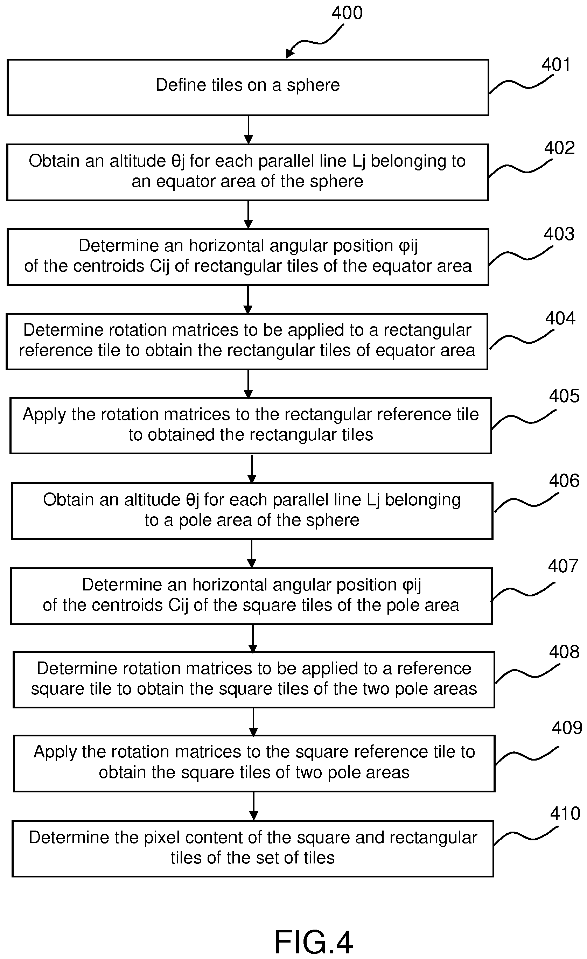

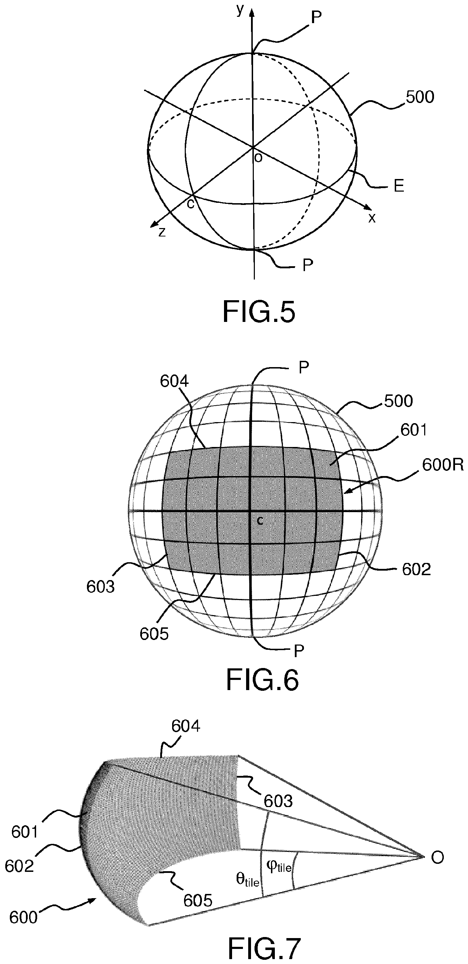

According to the present principles, the network equipment 300 (e.g. via its processor(s) 304 and/or content generator 306) can be configured to implement a method 400 (shown in Figure 4) for tiling a spherical video with a set of tiles comprising two types of tiles in an orthogonal system of axes x,y,z R(O,x,y,z) (as shown in Figure 5) arranged at a center O of a sphere 500 representing the spherical video. The center O of the sphere corresponds to the position of the acquisition device which has been used to acquire the spherical video.

In particular, in an embodiment of the present principles, the scene 500 of the spherical video is spatially split with a first type of tiles (e.g. rectangular shape) on an equator area surrounding the equator $L_0$ and with a second type of tiles (e.g. square shape) on two pole areas arranged at the poles of the sphere 500. the rectangular tiles are distributed over the equator area and the square tiles are arranged in the two distinct pole areas. The first type and the second type of tiles are different from each other. Naturally, other shapes of tiles might be considered, without departing from the scope of the present principles.

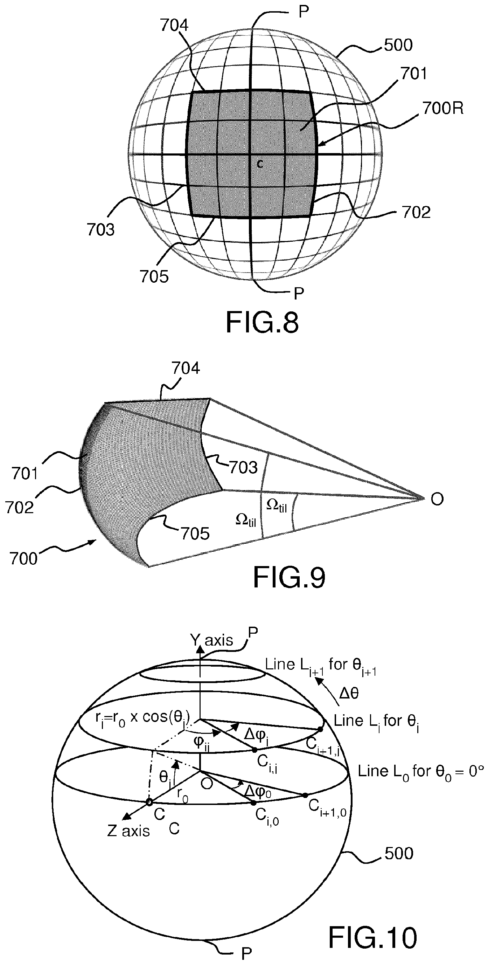

As shown in the example of Figures 6 to 9, each tile of the set of tiles can be defined, in a step 401, as a portion 601, 701 of said sphere 500 covering a tile horizontal angular amplitude and a tile vertical angular amplitude. For the rectangular tiles (Figures 6 and 7), the tile horizontal angular amplitude $\varphi_{tile}$ is distinct from the tile vertical angular amplitude $\theta_{tile}$. For the square tiles (Figures 8 and 9), the tile horizontal angular amplitude $\Omega_{tile}$ is equal to the tile vertical angular amplitude $\Omega_{tile}$.

While it might be different, in the considered embodiment, the horizontal angular amplitude $\varphi_{tile}$ of a rectangular tile 600 is distinct from the horizontal angular amplitude $\Omega_{tile}$ of a square tile 700. In particular, in an illustrative and non-limiting example of the present principles, the horizontal and vertical angular amplitudes $\Omega_{tile}$ of a square tile 700 can be defined by:

$$\Omega_{tile} = \sqrt{(\varphi_{tile} \times \theta_{tile})}$$

which might be set to round $(\sqrt{(\varphi_{tile} \times \theta_{tile})}) + 1$ degree (wherein round is a function configured for returning the nearest integer).

The tile horizontal angular amplitude $\varphi_{tile}$ and the tile vertical angular amplitude $\theta_{tile}$ can be determined by taking into account one or several of service parameters of the targeted spherical video service (such as, a network available bandwidth for delivery along a transmission path between the client terminal 100 and the network equipment 300, a quality of the requested spherical video, a user field of view associated with the viewport of the client terminal 100, etc.).

*Tiles determination for the equator area*

A reference rectangular tile 600R depicted in Figure 5 has a center C corresponding to the intersection of the Oz axis (positive part) of the orthogonal system R(O,x,y,z) with the surface of the sphere 500 representing the spherical video. In the system R(O,x,y,z), the coordinates of the point C is (0,0,1), i.e. $x_c=0$, $y_c=0$ and $z_c=1$. Its spherical coordinates are (1,0,0), i.e. $\rho_c=1$, $\theta_c=0$ and $\varphi_c=0$. The reference rectangular tile 600R can then be defined by the area of the scene comprised between:

- the meridian 602 indicating $\varphi = + \varphi_{tile}/2$;
- the meridian 603 indicating $\varphi = - \varphi_{tile}/2$;
- the parallel 604 indicating $\theta = + \theta_{tile}/2$;
- the parallel 605 indicating $\theta = - \theta_{tile}/2$.

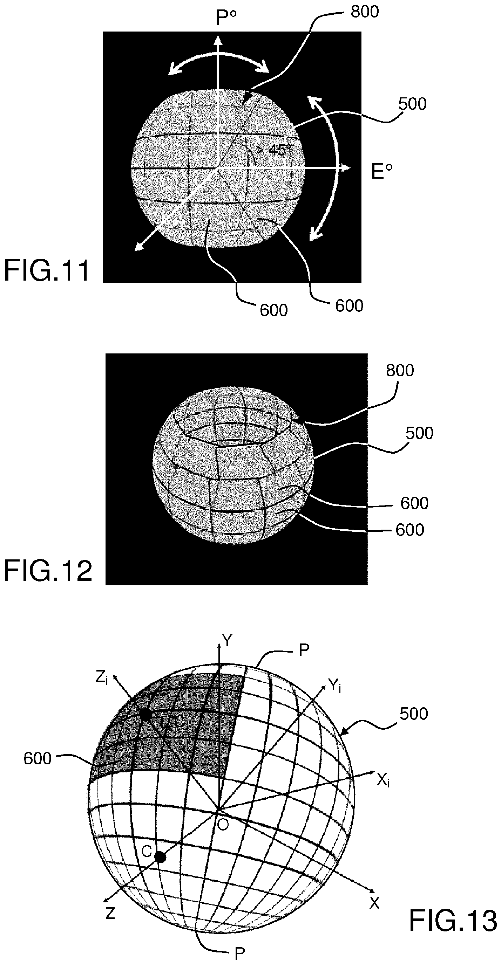

In addition, the central point (so called centroid) $C_{ij}$ of a rectangular tile 600 belonging to the equator area 800 (shown in Figures 11 and 12) can be defined with the spherical coordinates (1, $\theta_j$, $\varphi_{ij}$) in the system R(O,x,y,z).

To determine the centroids $C_{ij}$ (shown in Figure 10) of the rectangular tiles 600 of the equator area 800, the network equipment 300 can, in a step 402, obtain an altitude $\theta_j$ for each parallel line $L_j$ of the sphere 500 which comprises one or several centroids $C_{ij}$ of rectangular tiles 600. The angle between two consecutive parallel lines $L_j$ corresponds to $\theta_{tile}$.

The number L of parallel lines $L_j$ of the equator area 800 depends on the tile vertical angular amplitude $\theta_{tile}$ and can be given by:

$$L = round (90° / \theta_{tile}) + 1.$$

It should be noted that, a large part of the navigation within a scene being done around the equator area (paved with rectangular tiles to support, for instance, a better 16/9 viewport matching), the vertical equator area amplitude E° can be maximized (e.g. in an illustrative but non-limiting example larger than 90°). In particular, the vertical angular amplitude E° of the equator area 800 (e.g. having an annular shape as shown in Figure 11) can be defined as follows:

$$E° = (round (90° / \theta_{tile}) + 1) \times \theta_{tile}$$

The following list of altitude $\theta_j$ for the parallel lines $L_j$, i.e. a list of possible altitude values $\theta_j$ for the centroids $C_{ij}$ of the rectangular tiles 600 can then be obtained:

- when L mod (L/2) = 1 (mod being the modulo function), then the list of possible $\theta_j$ values is given by:

$$\theta_j = \theta_{tile} \times j$$

wherein j belongs to [-L/2, ..., 0, ..., L/2] with j=0 at the equator $L_0$,
- when L mod (L/2) = 0, then the list of possible $\theta_j$ values is given by:

$$\theta_j = k \times (\theta_{tile} / 2 + \theta_{tile} \times j)$$

wherein k belongs to [1, -1] and j belongs to [0, ..., (L/2 - 1)]

The number of rectangular tiles per parallel line $L_j$ depends on the circumference of the considered parallel line $L_j$ and on the horizontal angular amplitude of the tile $\varphi_{tile}$.

Once the parallel lines $L_j$ are defined, the network equipment 300 can, in a step 403, determine the horizontal angular position of the centroids $C_{ij}$ on the corresponding parallel lines $L_j$ of the equator area 800. The number of rectangular tiles 600 arranged on a parallel line $L_j$ decreases when moving through the poles P, as it is proportional to the circumference of the parallel line $L_j$. By considering a circumference $C_0$ at the equator $L_0$, the circumference $C_j$ at the bottom (i.e. the closest to the equator $L_0$) of the rectangular tiles 600 for parallel lines $L_j$ in the north hemisphere of the spherical scene is given by the following formulae:

$$C_j = C_0 \times \cos (\theta_j - \theta_{tile}/2)$$

The circumference $C_j$ at the top (i.e. the closest to the equator $L_0$) of the tiles for parallel lines in the south hemisphere of the spherical scene is given by:

$$C_j = C_0 \times \cos (\theta j + \theta_{tile} / 2)$$

It is worth noting that, in the north hemisphere, the circumference at the bottom of a tile is longer than circumference at the center of the tile and that, in the south hemisphere, the circumference at the top of the tiles is longer than circumference at the center of the tile.

The number $T_j$ of rectangular tiles (presenting, for instance, a minimum overlapping) for a parallel line $L_j$ is then defined as follows:

- $T_j$ = ceiling (360° / $\varphi_{tile}$) at the equator $L_0$,
- $T_j$ = ceiling ((360° / $\varphi_{tile}$) x cos ($\theta_j - \theta_{tile.} / 2$)) for the north hemisphere, and
- $T_j$ = ceiling ((360° / $\varphi_{tile}$) x cos ($\theta_j + \theta_{tile.} / 2$)) for the south hemisphere,

wherein ceiling corresponds to a ceiling function configured for returning the lowest integer at least equal to the considered expression.

Thus, for a parallel line $L_j$, the rectangular tiles 600 have their centroids $C_{ij}$ arranged at the following longitudes $\varphi_{ij}$:

- $\varphi_{ij} = \varphi_{tile} \times i$ at the equator $L_0$,
- $\varphi_{ij}$ = (round ($\varphi_{tile} / \cos (\theta_j - \theta_{tile.} / 2)$)) x i in the north hemisphere, and
- $\varphi_{ij}$ = (round ($\varphi_{tile} / \cos (\theta_j + \theta_{tile.} / 2)$)) x i in the south hemisphere,

wherein i belongs to [0, ..., $T_j$ -1].

$\varphi_{ij}$ represents a rotation angle around axis y with respect to the segment OC and $\theta_j$ a rotation angle around axis x with respect to OC. The segment $OC_{ij}$ (i.e. the centroid $C_{ij}$) shown in Figure 13 can be obtained (step 404) by a rotation matrix applied to the segment OC defined as follows:

$$OC_{ij} = Rot_{ij}(OC)$$

with $Rot_{ij}$ the rotation matrix.

In an embodiment of the present principles, the rotation matrix $Rot_{ij}$ can be a matrix product of two rotation matrices defined by the following equation:

$$Rot_{ij} = Rot(y, \varphi_{ij}) \times Rot(x, \theta_j)$$

wherein:

- Rot(x, $\theta_j$) is rotation matrix associated with a rotation of the angle $\theta_j$ around the x axis of the orthogonal system R(O,x,y,z), and
- Rot(y, $\varphi_{ij}$) is rotation matrix associated with a rotation of the angle $\varphi_{ij}$ around the y axis of the orthogonal system R(O,x,y,z).

In an embodiment of the present principles, to obtain the tile mesh associated with the rectangular tile of centroid $C_{ij}$ (the mesh center of a rectangular tile is arranged at the center of said tile), the rotation matrix $Rot_{ij}$ can be applied, in a step 405, to a reference rectangular tile mesh associated with the reference rectangular tile 600R of centroid C. The reference rectangular tile 600R can serve as a model for all the rectangular tiles 600 of the equator area 800. The rotation matrix $Rot_{ij}$ is then applied to all vertices of the reference mesh to obtain the vertices of the tile mesh associated with the rectangular tile centered on $C_{ij}$.

*Tiles determination for the two pole areas*

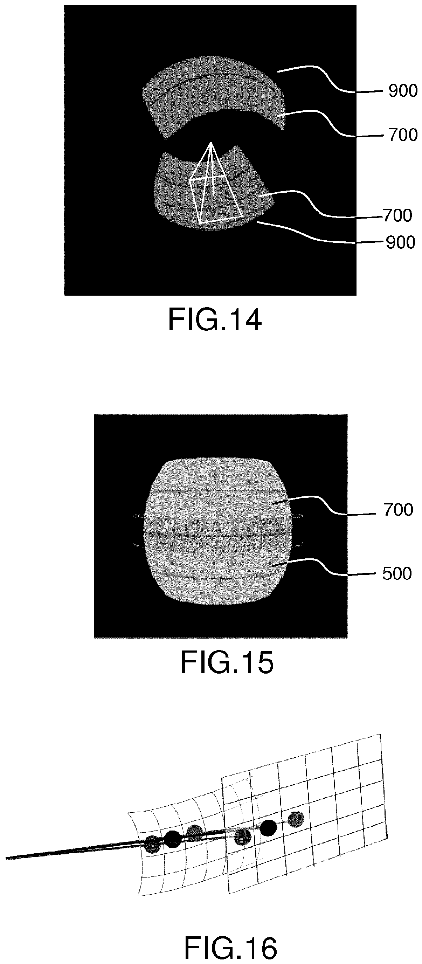

In addition, for each pole area 900 depicted in Figure 14, the square tiles 700 are initially arranged at front of the sphere 500 in the same way as for the rectangular tiles 600 (i.e. definition of the number and latitudes of the parallel lines and then definition of the number of tiles and longitudes of their centers along the associated parallel lines). These square tiles are then moved to the pole thanks to a rotation around axe x ($\pm$ 90° for north/south hemisphere).

The reference square tile 700R shown in Figure 8 has a center C corresponding to the intersection of the Oz axis (positive part) of the orthogonal system R(O,x,y,z) with the surface of the sphere 500 representing the spherical video. The reference square tile 700R can then be defined by the area of the scene comprised between:

- the meridian 702 indicating $\varphi$ = + $\Omega_{tile}$/2;
- the meridian 703 indicating $\varphi$ = - $\Omega_{tile}$/2;
- the parallel 704 indicating $\theta$ = + $\Omega_{tile}$/2;
- the parallel 705 indicating $\theta$ = - $\Omega_{tile}$/2.

As for the rectangular tiles 600, the centroid $C_{ij}$ of a square tile 700 can be first defined with the spherical coordinates (1, $\theta_j$, $\varphi_{ij}$) in the system R(O,x,y,z).

Besides, the horizontal angular amplitude P° delimiting a pole area 900 (the horizontal angular amplitude being equal to the vertical angular amplitude) can be defined by the difference between an angle corresponding to half of the sphere (i.e the scene vertical angular amplitude) and the vertical angular amplitude E° of the equator area 800:

$$P° = 180° - ((round\ (90° / \theta_{tile}) + 1) \times \theta_{tile})$$

To determine the centroids $C_{ij}$ of the square tiles 700, the network equipment 300 can, in a step 406, obtain an altitude $\theta_j$ for each parallel line $L_j$ of the sphere 500 which comprises one or several centroids $C_{ij}$ of square tiles 700. The angle between two consecutive parallel lines $L_j$ corresponds to $\Omega_{tile}$.

The number of parallel lines $L_j$ of a pole area 900 depends on the tile vertical angular amplitude $\Omega_{tile}$ and can be given by:

$$L = round\ (P° / \Omega_{tile}) + 1$$

This leads to the following list of altitude $\theta_j$ for the parallel lines $L_j$, i.e a list of possible altitude values $\theta_j$ for the centroids $C_{ij}$ of the square tiles 700:

- when L mod (L/2) = 1, then the list of possible $\theta_j$ values is given by:

$$\theta_j = \Omega_{tile} \times j$$

wherein j belongs to [-L/2, ..., 0, ..., L/2] with j=0 at the equator,
- when L mod (L/2) = 0, then the list of possible $\theta_j$ values is given by:

$$\theta_j = k \times (\Omega_{tile} / 2 + \Omega_{tile} \times j)$$

wherein k belongs to [1, -1] and j belongs to [0, ..., (L/2 - 1)]

At the pole areas 900, the number T of square tiles per line is equal to the number of lines, so that the number of tiles per line (presenting a minimum overlapping), for a parallel line $L_j$ is given by:

$$T = L = round\ (P° / \Omega_{tile}) + 1$$

It should be noted the pole areas are identical and are paved with a tiled square area.
This leads (step 407) to a list of longitude $\varphi_{ij}$ for the square tiles 700 in the system R(O,x,y,z):

- when T mod (T / 2) = 1, the list of possible $\varphi_{ij}$ values is given by:

$$\varphi_{ij} = \Omega_{tile} \times i$$

wherein i belongs to [-T/2, ..., 0, ..., T/2] with i=0 at the equator,
- when T mod (T / 2) = 0, the list of possible $\varphi_{ij}$ values is given by:

$$\varphi_{ij} = k \times (\Omega_{tile} / 2 + \Omega_{tile} \times i)$$

wherein k belongs to [1, -1] and i belongs to [0, ..., (T/2 -1)].

$\varphi_{ij}$ represents a rotation angle around axis y with respect to the segment OC and $\theta_j$ a rotation angle around axis x with respect to OC.
According to the principles, the square tiles 700 as defined (shown in Figure 15) are then moved to the poles P thanks to a rotation around axe x ($\pm$ 90° north/south hemisphere).
Thus, the segment $OC_{ij}$ can be obtained by a rotation matrix applied to OC defined (step 408) as follows:

$$OC_{ij} = Rot'_{ij}(OC) = Rot(x, \psi_i) \times Rot(y, \varphi_{ij}) \times Rot(x, \theta_j)$$

wherein:

- Rot'$_{ij}$ is a matrix product,
- Rot(x, $\theta_j$) is the rotation matrix associated with a rotation of an angle $\theta_j$ around an axis x of the orthogonal system R(O,x,y,z),
- Rot(y, $\varphi_{ij}$) is the rotation matrix associated with a rotation of an angle $\varphi_{ij}$ around the axis y of the orthogonal system,
- Rot(x, $\psi_i$) is a rotation matrix associated with a rotation of an angle $\psi_i$ around the axis x of the orthogonal system equals to 90° or - 90°.

In an embodiment of the present principles, to obtain the tile mesh associated with the square tile of centroid $C_{ij}$ (the mesh center of a square tile is arranged at the center of said tile), the rotation matrix Rot'$_{ij}$ can be applied, in a step 409, to a reference square tile mesh associated with the reference square tile 700R of centroid C. The reference square tile 700R of Figure 8 can serve as a model for all the square tiles. The rotation matrix Rot'$_{ij}$ is then applied to all vertices of the reference mesh to obtain the vertices of the tile mesh associated with the square tile centered on $C_{ij}$.
In a step 410, the network equipment 300 can determine the pixel content of the tiles, e.g. by using a known ray-tracing technique computing ray intersection between the rotated tile shape and a 360° video frame of the spherical video projected on the sphere 500.
As shown in Figure 16, when the content delivered to the player 104 of a client terminal 100 is an MPEG video, i.e. a 2D array of pixels, every generated tile (i.e. portion of the sphere 500) can be translated into such a 2D array by a projection of spherical portion to a plane.

Besides, according to the present principles, the streaming controller 103 of the client terminal 100 - receiving the spherical video from the network equipment 300 - can be further configured to continually select the segments associated with the tiles covering, for instance, the current viewport associated with the terminal 100. In the example of adaptive streaming, the switch from a current tile to a next tile - both comprising the current viewport - may occur only at the end of a video segment and at the beginning of the next one.

To this end, the client terminal 100 can receive, from the network equipment 300, the values of the horizontal and vertical angular amplitudes ($\varphi_{tile}$, $\theta_{tile}$, $\Omega_{tile}$) of the square and rectangular tiles, in order to be able to regenerate the correspondings tile reference meshes. The network equipment 300 can also send all the vertices of the reference square and rectangular tiles 600R to terminal 100 and the list of rotation matrices $Rot_{ij}$ to be applied to the tile reference meshes to obtain the tiles covering the sphere 500. In a variant, the network equipment can only share with the terminal 100 the spherical coordinates of the centroid $C_{ij}$, when the terminal 100 is configured to dynamically re-compute the rotation matrices by using appropriate mathematic libraries.

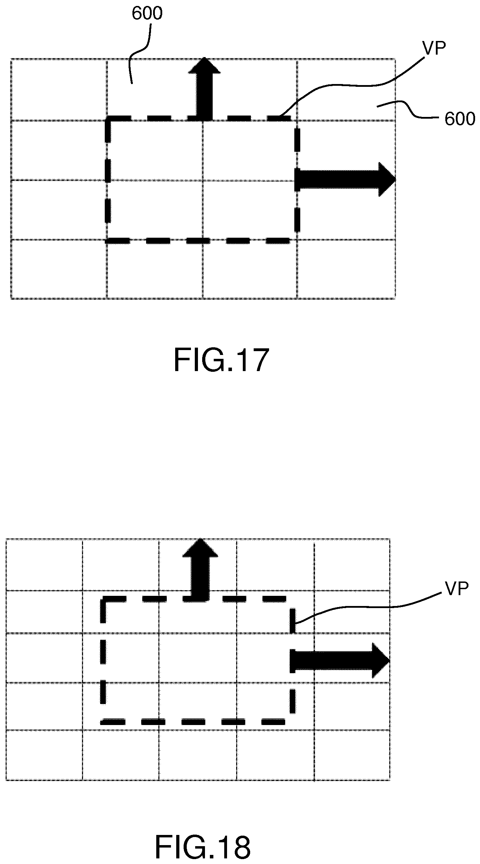

In an illustrative but non-limitative example of the present principles, to take into account the inevitable latency due to the recovery of the video from the server, a larger scene than a viewport VP can be delivered to the video player of the client terminal. For instance, to ensure the availability of the viewport in HD format (1920x1080 pixels), sixteen 1K video tiles (i.e 16x(960x540) = 3840x2160 pixels) are delivered to the client terminal 100 allowing overprovisioning, as shown in Figure 17. The viewport has a size equal to 4 tiles. Naturally, different overprovisioning patterns can be implemented without departing from the present principles such as the one illustrated in Figure 18.

It should be noted that the tiling pattern impacts the coding efficiency. That is, larger tiles provide a better coding efficiency but less flexibility for viewport selection and smaller tiles provide a better match to a given viewport but consequently reduce coding efficiency.

At the beginning of a navigation, the center of the scene of the spherical video is visualized through the viewport. 16 tiles need to be delivered to the client terminal. At this moment, the user can freely change his point of view up/down or left/right within the portion of scene covered by the 16 tiles with no video disruption.

When the user is moving continuously his point of view to the right (left respectively), the 4 left tiles (right tiles respectively) will have to be replaced by 4 right tiles (left tiles respectively) to properly overprovision the future viewport. Same rules apply vertically.

In a further aspect of the present principles, to bring a good user experience, the Field Of View of the viewport needs to be wide enough not to give the feeling of seeing only a narrow part of a scene and to provide an acceptable level of immersion to the end user. By contrast, the FOV should not be too large to preserve an acceptable resolution (the larger the FOV, the less the number of pixel per degree is). In an illustrative but non-limiting example, the horizontal FOV for the viewport in HD format can be equal to 60° with a vertical FOV of 36° (to respect, for instance, a 16:9 ratio of the spherical video), so that the horizontal overprovisioning FOV (associated with a 16 1K tiles pattern) is about 120° in UHD format with a vertical FOV corresponding to 72°.

Thanks to the above described method, by delivering only a portion of the scene, the ratio of video quality over data bitrate can be controlled and a high-quality video on client side can be obtained, even with network bandwidth constraints. In addition, by tiling the spherical scene of an immersive video with two different types of tiles distributed among an equator area and two pole areas, the freedom given to the user for moving in any directions is improved. Tiles having a rectangular shape (i.e. with same aspect ratio as the viewport) are well adapted to an equator area where the navigation is similar to a horizontal movement of the viewport on a plane (more precisely on a cylinder). By contrast, tiles having a square shape are more suited to pole areas where a horizontal panning of the viewport becomes a rotation around the pole (no priority given to any axe).

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the method and device described. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

Although certain embodiments only of the disclosure have been described herein, it will be understood by any person skilled in the art that other modifications, variations, and possibilities of the disclosure are possible. Such modifications, variations and possibilities are therefore to be considered as falling within the spirit and scope of the disclosure and hence forming part of the disclosure as herein described and/or exemplified.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. In particular, in Figure 4, steps 401 to 410 can be implemented in a different order. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

**Claims**

1.  A method for tiling with a set of tiles (600, 700) a sphere (500) representing a scene of a spherical immersive content, said method (400) comprising:

    - spatially splitting the scene of the spherical multimedia content with at least a first type of tiles (600) and a second type of tiles (700).

2.  The method according to claim 1, wherein the tiles (600, 700) of the set of tiles are distributed amongst three different areas (800, 900) of the sphere (500).

3.  The method according to claim 2, wherein the three areas (800, 900) comprise an equator area (800) surrounding the equator ($L_0$) of the sphere (500) and two pole areas (900) arranged at the poles (P) of the sphere.

4.  The method according to claims 1 to 3, comprising:

    - obtaining (402) an altitude ($\theta_j$) for each parallel line ($L_j$) of the sphere (500) comprising one or several centroids ($C_{ij}$) of the tiles of the first type (600), each tile of the first type (600) being defined as a portion (601) of said sphere (500) covering a tile horizontal angular amplitude ($\varphi_{tile}$) and a tile vertical angular amplitude ($\theta_{tile}$);
    - obtaining (403) an angular position ($\varphi_{ij}$) for each centroid ($C_{ij}$) of the tiles of first type (600) arranged on the parallel lines ($L_j$);
    - applying (405) first rotation matrices to a reference tile of first type (600R) to obtain the tiles of the first type (600), each of said first rotation matrices depending on the obtained altitude ($\theta_j$) and angular position ($\varphi_{ij}$) of the centroid ($C_{ij}$) of a corresponding tile of first type (600) to be obtained.

5.  The method according to claim 4, wherein each of said first rotation matrices is a first matrix product of two rotation matrices defined by the following equation:

$$Rot_{ij} = Rot(y, \varphi_{ij}) * Rot(x, \theta_j)$$

    wherein:

    - $Rot_{ij}$ is the first matrix product,
    - $Rot(x, \theta_j)$ is a rotation matrix associated with a rotation of an angle ($\theta_j$) around an axis x of an orthogonal system of axes x,y,z (R(O,x,y,z)) arranged at a center (O) of the sphere (500),
    - $Rot(y, \varphi_{ij})$ is a rotation matrix associated with a rotation of an angle ($\varphi_{ij}$) around the axis y of the orthogonal system.

6.  The method according to claim 4 or 5, wherein the equator area (800) comprises a number of parallel lines ($L_j$) depending on the vertical angular amplitude ($\theta_{tile}$) of the tiles of the first type (600).

7.  The method according to claims 1 to 6, comprising:

- obtaining (406) an altitude ($\theta_j$) for each parallel line ($L_j$) of the sphere (500) comprising one or several centroids ($C_{ij}$) of the tiles of the second type (700), each tile of the second type (700) being defined as a portion (701) of said sphere (500) covering a tile horizontal angular amplitude ($\Omega_{tile}$) and a tile vertical angular amplitude ($\Omega_{tile}$);
- obtaining (407) an angular position ($\varphi_{ij}$) for each centroid ($C_{ij}$) of the tiles of second type (700) arranged on the parallel lines ($L_j$);
- applying (409) second rotation matrices to a reference tile of second type (700) to obtain the tiles of the second type (700), each of said second rotation matrices depending on the obtained altitude ($\theta_j$) and angular position ($\varphi_{ij}$) of the centroid ($C_{ij}$) of a corresponding tile of second type (700) to be obtained.

8. The method according to claim 7, wherein each of said second rotation matrices is a second matrix product of three rotation matrices defined by the following equation:

$$\text{Rot'}_{ij} = \text{Rot}(x, \psi_i) \times \text{Rot}(y, \varphi_{ij}) \times \text{Rot}(x, \theta_j)$$

wherein:

- $\text{Rot'}_{ij}$ is the second matrix product,
- $\text{Rot}(x, \theta_j)$ is a rotation matrix associated with a rotation of an angle ($\theta_j$) around an axis x of an orthogonal system of axes x,y,z (R(O,x,y,z)) arranged at a center (O) of the sphere (500),
- $\text{Rot}(y, \varphi_{ij})$ is a rotation matrix associated with a rotation of an angle ($\varphi_{ij}$) around the axis y of the orthogonal system,
- $\text{Rot}(x, \psi_i)$ is a rotation matrix associated with a rotation of an angle ($\psi_i$) around the axis x of the orthogonal system equals to + 90° or - 90°.

9. The method according to claim 8, wherein a pole area (900) comprises a number of parallel lines ($L_j$) depending on the vertical angular amplitude ($\Omega_{tile}$) of the tiles of the second type (700).

10. The method according to claims 1 to 9, wherein the tiles of the first type (600) have a rectangular shape and the tiles of the second type (700) have a square shape.

11. A network equipment configured for tiling with a set of tiles (600) a sphere (500) representing a scene of a spherical immersive content,
said network equipment (300) comprising at least one memory (305) and at least one processing circuitry (304) configured to spatially split the scene of the spherical multimedia content with at least a first type of tiles (600) and a second type of tiles (700).

12. The network equipment according to claim 10, wherein the tiles of the set of tiles are distributed amongst three areas (800, 900) on the scene.

13. The network equipment according to claim 11, wherein the three areas comprise an equator area (800) surrounding the equator of the sphere and two pole areas (900) arranged at the poles of the sphere (500).

14. A method to be implemented at a terminal (100) configured to be in communication with a network equipment (300) to receive a spherical immersive content with a scene represented by a sphere (500),
wherein the method comprises receiving information on a tiling of the scene with a set of tiles from the network equipment, the tiling spatially splitting the scene of the spherical multimedia content with at least a first type of tiles (600) and a second type of tiles (700).

15. A terminal configured to be in communication with a network equipment (300) to receive a spherical immersive content with a scene represented by a sphere (500),
wherein said terminal (100) comprises at least one memory (106) and at least one processing circuitry (105) configured for receiving information on a tiling of the scene with a set of tiles (600, 700) from the network equipment, the tiling spatially splitting the scene of the spherical multimedia content with at least a first type of tiles (600) and a second type of tiles (700).

100    N1    200    N2    300

FIG.1

100

Client terminal

101 — Interface of connection          Communicating circuitry — 102

103 — Streaming controller          Video player — 104

105 — Processor          Storing means — 106

107

FIG.2

300

Network equipment

301 — Interface of connection          Communicating circuitry — 302

303 — Streaming controller          Storing means — 305

304 — Processor          Content generator — 306

307

FIG.3

400

| Define tiles on a sphere | 401 |

↓

| Obtain an altitude θj for each parallel line Lj belonging to an equator area of the sphere | 402 |

↓

| Determine an horizontal angular position φij of the centroids Cij of rectangular tiles of the equator area | 403 |

↓

| Determine rotation matrices to be applied to a rectangular reference tile to obtain the rectangular tiles of equator area | 404 |

↓

| Apply the rotation matrices to the rectangular reference tile to obtained the rectangular tiles | 405 |

↓

| Obtain an altitude θj for each parallel line Lj belonging to a pole area of the sphere | 406 |

↓

| Determine an horizontal angular position φij of the centroids Cij of the square tiles of the pole area | 407 |

↓

| Determine rotation matrices to be applied to a reference square tile to obtain the square tiles of the two pole areas | 408 |

↓

| Apply the rotation matrices to the square reference tile to obtain the square tiles of two pole areas | 409 |

↓

| Determine the pixel content of the square and rectangular tiles of the set of tiles | 410 |

# FIG.4

FIG.5

FIG.6

FIG.7

FIG.8

FIG.9

FIG.10

FIG.11

FIG.12

FIG.13

FIG.14

FIG.15

FIG.16

FIG.17

FIG.18

Europäisches
Patentamt

European
Patent Office

Office européen
des brevets

# EUROPEAN SEARCH REPORT

Application Number

EP 18 30 5077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LUCIA D'ACUNTO ET AL: "MPD signalling of 360 content properties for VR applications", 115. MPEG MEETING; 30-5-2016 - 3-6-2016; GENEVA; (MOTION PICTURE EXPERT GROUP OR ISO/IEC JTC1/SC29/WG11),, no. m38605, 25 May 2016 (2016-05-25), XP030066957, * abstract * * Chapter 3.3.2 * * figures 8-13 * | 1-3, 10-15 | INV. G06F3/0481 H04N5/232 G06T15/20 |
| X | WO 2017/127816 A1 (WEN ZIYU [CN]; ZHAO YIKAI [CN]; LI JISHENG [CN]; GUO BICHUAN [CN]; WEN) 27 July 2017 (2017-07-27) * abstract * * paragraphs [0064] - [0065]; figures 6-7 * | 1-3, 10-15 | |
| X | LU Y ET AL: "EE4: Padding method for Segmented Sphere Projection", 7. JVET MEETING; 13-7-2017 - 21-7-2017; TORINO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-G0128, 10 July 2017 (2017-07-10), XP030150934, * the whole document * | 1-3, 10-15 | TECHNICAL FIELDS SEARCHED (IPC) G06F H04N G06T |
| X | LUCIA D 'ACUNTO ET AL: "MPD signalling of 360 content properties for VR applications", 115. MPEG MEETING; 30-5-2016 - 3-6-2016; GENEVA; (MOTION PICTURE EXPERT GROUP OR ISO/IEC JTC1/SC29/WG11), no. m38605, 25 May 2016 (2016-05-25), XP055327831, * the whole document * | 1-3, 10-15 | |

~~The present search report has been drawn up for all claims~~

| Place of search | Date of completion of the search | Examiner |
|---|---|---|
| Munich | 28 March 2018 | Lindgren, Johan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 18 30 5077

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-3, 10-15

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION**
**SHEET B**

Application Number

EP 18 30 5077

The Search Division considers that the present European patent application does not comply with the requirements of unity of invention and relates to several inventions or groups of inventions, namely:

1. claims: 1-3, 10-15

   From the wording of the claims and by referring to the description (cf. the passage bridging pages 17-18) it is clear that the first claimed invention teaches applying two types of tiles in order to solve the problem of improved movement/panning for the user. In particular, the poles are mapped to square shaped tiles whereas viewport shaped tiles (e.g., 16:9, rectangles) are preferred at the equator area. Thereby - during horizontal panning - the squares of the poles rotate around their own respective axis and would hence not prioritise any arbitrary axis.

   ---

2. claims: 4-9

   From the wording of the claims and by referring to the description (cf. the chapter "Tiles determination for the equator area" starting on page 11 and culminating in the definition of the rotational matrix on page 13; also, see the corresponding definition applied to the pole areas on pages 14 ff.) it is clear that the second claimed invention relates to defining the positional relationship between the tiles of a sphere such that the tile mesh be visited by merely applying a rotational matrix to a reference tile.

   ---

## ANNEX TO THE EUROPEAN SEARCH REPORT
## ON EUROPEAN PATENT APPLICATION NO.

EP 18 30 5077

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2018

| Patent document cited in search report | Publication date | Patent family member(s) | Publication date |
|---|---|---|---|
| WO 2017127816 A1 | 27-07-2017 | NONE | |

EPO FORM P0459

For more details about this annex : see Official Journal of the European Patent Office, No. 12/82